# EUROPÄISCHE PATENTSCHRIFT

(11) **EP 3 495 589 B1**
(45) Veröffentlichungstag und Bekanntmachung des Hinweises auf die Patenterteilung: **28.09.2022**
(21) Anmeldenummer: 18209309.6
(22) Anmeldetag: 29.11.2018
(51) Int. Cl.: F03D 13/20, E04H 12/34, E04H 12/08

(54) **TURM EINER WINDENERGIEANLAGE, VERFAHREN ZUM ERRICHTEN EINES TURMS EINER WINDENERGIEANLAGE, WINDENERGIEANLAGE**
WIND POWER PLANT, TOWER OF A WIND POWER PLANT AND METHOD FOR BUILDING A TOWER OF A WIND POWER PLANT
TOUR D'UNE ÉOLIENNE, PROCÉDÉ DE CONSTRUCTION D'UNE TOUR D'UNE ÉOLIENNE, ÉOLIENNE

(30) Priorität: 06.12.2017 DE 102017011236
(43) Veröffentlichungstag der Anmeldung: 12.06.2019
(73) Patentinhaber: Siemens Gamesa Renewable Energy Service GmbH, 20097 Hamburg (DE)
(72) Erfinder: FROST, Bernd, 25551 Winseldorf (DE)
(74) Vertreter: Schlotter, Alexander Carolus Paul

(56) Entgegenhaltungen:
- EP-A1- 2 385 245
- EP-A2- 2 242 885
- EP-A2- 2 692 967
- DE-C1- 10 144 167
- US-A1- 2017 044 734

## Beschreibung

Die Erfindung betrifft einen Turm einer Windenergieanlage, umfassend eine Mehrzahl von zylindrischen und/oder konischen Stahlrohrvollsegmenten, die auf einem Fundament vertikal übereinander angeordnet und miteinander mittels Flanschverbindungen verbunden sind. Die Erfindung betrifft ferner ein Verfahren zum Errichten eines entsprechenden Turmes sowie eine entsprechende Windenergieanlage.

Es existieren verschiedene Bauformen für Türme für Windenergieanlagen, unter anderem Gittertürme, Türme aus Stahlsegmenten, Hybridtürme, die Betonsegmente im unteren Teil und Stahlsegmente im oberen Teil aufweisen, sowie seltener auch Holzkonstruktionen.

Aufgrund ihrer Wirtschaftlichkeit finden Türme aus Stahlsegmenten weiten Einsatz, die in einem Werk vorgefertigt und auf der Baustelle zusammengefügt werden. Die vorgefertigten Stahlsegmente haben in der Regel eine Länge bis zu 35 m und, je nach Transportroute, einen Durchmesser von bis zu 4,40 m oder 4,50 m. Dabei ist der Transportdurchmesser beim Straßen- oder Schienentransport unter anderem durch die Durchfahrtshöhe von Brücken limitiert. Dieses Konzept wird erfolgreich für Windenergieanlagen bis zu etwa 3 MW Leistung und Nabenhöhe von ca. 120 m angewandt.

Für leistungsstärkere Windenergieanlagen sowie größere Nabenhöhen steigt jedoch das Belastungsniveau im Turmfußbereich stark an, was zur Folge hat, dass die Anzahl der erforderlichen Bolzen für Flanschverbindungen auf dem zur Verfügung stehenden Durchmesser von 4,40 m nicht mehr untergebracht werden kann. Ferner reicht bei geringen Turmdurchmessern die Steifigkeit des Systems nicht mehr aus, um eine Frequenzanregung des Turmes durch die Anlage sicher auszuschließen. Bei schlanken Türmen kann diese Steifigkeit nur durch eine entsprechend größere Blechstärke erreicht werden, welche linear in die Steifigkeit eingeht, was sehr unwirtschaftlich ist. Wesentlich effektiver hingegen ist die Vergrößerung des Turmdurchmessers, welcher mit der dritten Potenz in die Steifigkeit eingeht. Solche breiteren Segmente überschreiten aber die Durchfahrtshöhenbegrenzungen für den Transport auf Straßen und Schienen.

Zur Umgehung dieser Problematik sind verschiedene Turmkonzepte bekannt. So ist es möglich, die Stahlsegmente vor Ort herzustellen, so dass ein Straßen- oder Schienentransport der vorgefertigten großen Stahlsegmente vermieden werden kann. Diese Bauweise erfordert allerdings eine aufwändige Baustelleneinrichtung und ist nur bei sehr großen Windparks wirtschaftlich. Außerdem ist die Qualitätssicherung für die Schweißnähte und die anschließende Lackierung vor Ort problematisch.

Alternativ können Stahlrohrtürme mit im unteren Bereich vertikal geteilten Turmsegmenten hergestellt werden, die somit aus jeweils zwei oder mehr Teilen bestehen, die an vertikal verlaufenden Fugen miteinander verbunden werden. Dieses Konzept kann als sogenanntes "HST"-Konzept (High Steel Tower) mit vertikal geteilten etwa 20 m langen Segmenten ausgeführt werden, was bezüglich Toleranzen und Kosten eine Herausforderung darstellt, oder als sogenanntes "LDST"-Konzept (Large Diameter Steel Tower), bei der der Turm als Stahlrohrsegment mit einem Durchmesser von ca. 5 bis 6 m mit vertikalen Fugen unterteilt ist. Diese Ausführungen des unteren hochbelasteten Turmbereichs aus mehreren Paneelen, die bauseits zu einem geschlossenen Turmsegment zusammengefügt werden, erfordert ebenfalls eine aufwändige Baustelleneinrichtung. Die vertikalen Verbindungsfugen sind außerdem sowohl bezüglich Herstellung als auch bezüglich ihrer Wartung kostenintensiv.

Ein Transport der unteren Turmsegmente mit großem Durchmesser kann auch durch eine Verwendung von Ortbeton, also vor Ort an der Baustelle gegossenen Segmenten, vermieden werden. Die Bauzeit für Türme aus Ortbeton ist allerdings länger als bei Stahltürmen, und die Herstellung erfordert geeignete Außentemperaturen, damit der Ortbeton in angemessen kurzer Zeit aushärten kann.

Ferner können Türme auch aus Betonfertigteilen hergestellt werden, die vertikal transportiert und bauseits zu einem Betonturm zusammengefügt werden. Diese Türme sind in der Regel als Hybridtürme ausgelegt, die oben mit einem Stahlrohrturm abschließen. Türme mit Betonfertigteilen sind allerdings gegenüber entsprechenden Stahlrohrtürmen wenig wirtschaftlich. Ferner haben Hybridtürme eine Leistungsbegrenzung, da der Übergang vom unteren Betonturm zum oberen Stahlturm über ein Adapterelement erfolgt, das sich nur für ein relativ geringes Lastniveau dimensionieren lässt, so dass die Länge des oberen Stahlrohrturmes wiederum begrenzt ist.

Die EP 2 385 245 A1 offenbart einen Stahlturm für eine Windkraftanlage mit mehreren übereinander angeordneten Segmenten, wobei die Segmente Stahl unterschiedlicher Qualität umfassen können und die Qualität des Stahls durch die Streckgrenze des Stahls bestimmt werden kann.

Die DE 101 44 167 C1 betrifft eine Windenergieanlage mit einem Turm, der aus einer Vielzahl von Rohrschüssen besteht, die durch Flansch-Schraubverbindungen miteinander verbunden sind, wobei am oberen Ende eine den Rotor tragende Gondel gelagert ist, die um eine vertikale Schwenkachse verschwenkbar ist, und wobei die Rohrabschnitte an der Basis des Turms aus Gusseisen bestehen.

Ferner ist aus EP 2 692 967 A2 ein Verfahren zum Errichten eines Turmes aus Stahl einer Windenergieanlage bekannt, bei dem im unteren Bereich des Turmes wenigstens zwei hohlzylindrische und/oder hohlkegelstumpfförmige Turmsegmente durch ein Unterpulverschweißverfahren am Ort der Errichtung des Turmes zusammengefügt und weitere Turmsegmente für den oberen Bereich des Turms untereinander mittels Flansch- und/oder Schweißverbindungen verbunden werden. Die wenigstens zwei unteren Segmente haben eine für einen aufrechten Straßen- oder Bahntransport angepasste Höhe und setzen einen Turmfußdurchmesser um, der größer ist als die für den liegenden Straßen- oder Bahntransport maximal zulässige Höhe, ohne dass beim Errichten des Turmes Bauteile parallel zur Turmachse zu verbinden sind. Das automatisierte Unterpulverschweißen im unteren Turmbereich erfolgt mit geringem Zeitaufwand kostengünstig und vermeidet die ausschließliche Nutzung von Flanschverbindungen, die für große Stahltürme aufgrund der im unteren Turmteil auftretenden hohen Belastungen begrenzt ist.

Demgegenüber liegt der vorliegenden Erfindung die Aufgabe zugrunde, die Errichtung, Stabilität und Wartbarkeit von Stahltürmen von Windenergieanlagen weiter zu verbessern.

Diese Aufgabe wird durch einen Turm einer Windenergieanlage gemäß Anspruch 1 gelöst. Der Turm umfasst eine Mehrzahl von zylindrischen und/oder konischen Stahlrohrvollsegmenten, die auf einem Fundament vertikal übereinander angeordnet und miteinander mittels Flanschverbindungen verbunden sind, der dadurch weitergebildet ist, dass wenigstens zwei der zuunterst im Turm angeordneten Stahlrohrvollsegmente jeweils ein Verhältnis von Segmenthöhe zu maximalem Durchmesser von 1 oder weniger aufweisen, wobei die oberen Stahlrohrvollsegmente jeweils eine Segmenthöhe aufweisen, die größer als ihr jeweiliger maximaler Durchmesser ist.

Der erfindungsgemäße Turm erleichtert die Herstellung eines Stahlrohrturms, da seine Stahlrohrvollsegmente im Turmfußbereich Proportionen aufweist, dass sie sich auch bei großem Durchmesser in vertikaler Position transportieren lassen. Der Begriff Stahlrohrvollsegment bezeichnet dabei im Rahmen der vorliegenden Erfindung ein Stahlrohrsegment, welches einen vollständigen Rohrabschnitt mit 360°-Umfang ausbildet, im Gegensatz zu Stahlrohrteilsegmenten, die zu einem Vollsegment erst unter Verbindung an vertikal verlaufenden Fugen zusammengefügt werden müssen. Unter einem konischen Stahlrohrvollsegment wird ein kegelstumpfförmiges Segment verstanden, bei dem der Durchmesser am unteren Ende größer ist als am oberen Ende, wobei dies im Rahmen der Erfindung auch solche konischen Segmente mit konkaver Krümmung des Durchmesserverlaufs von unten nach oben umfasst.

Mit der Auswahl von Flanschverbindungen auch im Turmfußbereich wird das Vorurteil überwunden, dass Flanschverbindungen bei größeren Windenergieanlagen im Turmfußbereich unwirtschaftlich oder auch technisch nicht darstellbar seien. Der größere Durchmesser des Turmfußes bietet auch bei einem im Turminneren angeordneten Flansch eine ausreichende Fläche für die erforderliche Anzahl von Bolzen. Zusätzlich hat eine Flanschverbindung gegenüber einer Schweißverbindung den Vorteil der besseren Wartbarkeit und einfacheren Qualitätskontrolle.

Die entsprechenden Stahlrohrvollsegmente können in einer zentralen Produktionsstätte gefertigt werden, so dass Schweißnähte und Qualitätskontrolle auf höchstem Niveau ausgeführt werden können. Gleichzeitig sind die Stahlrohrvollsegmente ohne größeren Aufwand auf Straße oder Schiene transportabel.

Gegenüber einem schlanken Stahlrohrturm mit langen Segmenten, die in horizontaler Lage transportiert werden, wird erfindungsgemäß ein Stahlrohrturm mit einem wirtschaftlichen Design realisiert. Der große Turmdurchmesser hat einen positiven Einfluss auf Ermüdungs- und Festigkeitsnachweise und verhindert auch bei großen Nabenhöhen, dass es beim Betrieb der Windenergieanlage zu einer Frequenzanregung des Turmes kommt.

Im Vergleich mit Türmen mit vertikaler Teilung im unteren Turmsegment werden die Einrichtung einer eigenen Baustelle sowie die höheren Kosten aufgrund der vertikalen Verbindungsfugen und deren Wartung vermieden.

Vorteilhafterweise weisen zwischen zwei und acht der zuunterst im Turm angeordneten Stahlrohrvollsegmente jeweils ein Verhältnis von Segmenthöhe zu maximalem Durchmesser von 1 oder weniger auf. Auf diese Weise ist es möglich, den breiten Turmfuß, der die Stabilität des Turmes erhöht, über eine ausreichende Höhe fortzuführen.

Die wenigstens zwei zuunterst im Turm angeordneten Stahlrohrvollsegmente weisen vorzugsweise jeweils eine Segmenthöhe von maximal 4,5 m und einen maximalen Durchmesser von minimal 4,5 m auf. Damit sind diese Stahlrohrvollsegmente liegend auf Straßen oder Schienen transportabel, insbesondere auch auf Autobahnen. Vorteilhafterweise betragen die Segmenthöhen der wenigstens zwei zuunterst im Turm angeordneten Stahlrohrvollsegmente zwischen 3,8 m und 4,5 m und die maximalen Durchmesser der wenigstens zwei zuunterst im Turm angeordneten Stahlrohrvollsegmente zwischen 4,5 m und 6,5 m, insbesondere zwischen 5,5 m und 6 m.

Wenn vorzugsweise wenigstens ein Teil der Flanschverbindungen zwischen den Stahlrohrvollsegmenten als L-Flanschverbindungen ausgestaltet sind, wobei insbesondere ein anderer Teil der Flanschverbindungen als T-Flanschverbindungen ausgestaltet ist, ist eine stabile und gut wartbare Verbindung der Stahlrohrsegmente gewährleistet.

Erfindungsgemäß in Bezug auf die Verankerung des Turmes in einem Fundament ist vorgesehen, dass ein unterstes Stahlrohrvollsegment über eine Flanschverbindung an ein im Fundament einbetoniertes Stahlsegment oder mit einer unteren L-Flanschverbindung mit einem im Fundament eingegossenen einreihigen Ankerkorb oder mit einer unteren T-Flanschverbindung mit einem im Fundament eingegossenen zweireihigen Ankerkorb angeschlossen ist. Zur Verbindung des untersten Stahlrohrvollsegments auf dem Fundament kann auch zusätzlich ein Turmfußadapter verwendet werden. Hierbei handelt es sich im Allgemeinen um einen flachen zylindrischen Ring mit Flanschen an der Oberseite und Unterseite. Ein solcher vergleichsweise leichter Turmfußadapter ist beispielsweise aus EP 1 849 920 B1 bekannt und wird bereits kurz nach der Fertigstellung des Fundaments aufgesetzt, wobei der Beton des Fundaments noch nicht vollständig ausgehärtet sein muss. Dadurch wird die Errichtung beschleunigt.

Die der Erfindung zugrunde liegende Aufgabe wird ebenfalls gelöst durch ein Verfahren zum Errichten eines Turms einer Windenergieanlage aus einer Mehrzahl von zylindrischen und/oder konischen Stahlrohrvollsegmenten, insbesondere einem zuvor beschriebenen erfindungsgemäßen Turm, wobei die Stahlrohrvollsegmente aufeinander aufgesetzt und mittels Flanschverbindungen miteinander verbunden werden, welches dadurch weitergebildet ist, dass wenigstens zwei der zuunterst im Turm angeordneten Stahlrohrvollsegmente jeweils ein Verhältnis von Segmenthöhe zu maximalem Durchmesser von 1 oder weniger aufweisen, wobei die oberen Stahlrohrvollsegmente jeweils eine Segmenthöhe aufweisen, die größer als ihr jeweiliger maximaler Durchmesser ist. Mit dem erfindungsgemäßen Verfahren wird ein erfindungsgemäßer Turm errichtet, so dass das Verfahren die zu dem erfindungsgemäßen Turm genannten Merkmale, Vorteile und Eigenschaften ebenfalls verwirklicht. Vorzugsweise werden zuunterst im Turm zwischen zwei und acht Stahlrohrvollsegmente eingebaut, deren Verhältnis von Segmenthöhe zu maximalem Durchmesser 1 oder weniger beträgt.

Weiter vorteilhaft werden zuunterst im Turm wenigstens zwei Stahlrohrvollsegmente eingebaut, die jeweils eine Segmenthöhe von maximal 4,5 m und einen maximalen Durchmesser von minimal 4,5 m aufweisen, wobei insbesondere zuunterst im Turm wenigstens zwei Stahlrohrvollsegmente eingebaut werden, die Segmenthöhen der wenigstens zwei zuunterst im Turm angeordneten Stahlrohrvollsegmente zwischen 3,8 m und 4,5 m betragen und die maximalen Durchmesser der wenigstens zwei zuunterst im Turm angeordneten Stahlrohrvollsegmente zwischen 4,5 m und 6,5 m, insbesondere zwischen 5,5 m und 6 m, betragen.

Vorzugsweise werden die Stahlrohrvollsegmente wenigstens zum Teil mittels L-Flanschverbindungen miteinander verbunden, wobei insbesondere ein anderer Teil der Stahlrohrvollsegmente mittels T-Flanschverbindungen miteinander verbunden wird.

In einer bevorzugten Weiterbildung des Verfahrens wird ein unterstes Stahlrohrvollsegment über eine Flanschverbindung an ein im Fundament einbetoniertes Stahlsegment oder mit einer unteren L-Flanschverbindung mit einem im Fundament eingegossenen einreihigen Ankerkorb oder mit einer unteren T-Flanschverbindung mit einem im Fundament eingegossenen zweireihigen Ankerkorb angeschlossen. In einer vorteilhaften Weiterbildung wird das unterste Stahlrohrvollsegment mittels eines Turmfußadapters mit dem Fundament, insbesondere dem einbetonierten Stahlsegment oder Ankerkorb, verbunden.

Die der Erfindung zugrunde liegende Aufgabe wird auch durch eine Windenergieanlage mit einem zuvor beschriebenen erfindungsgemäßen Turm gelöst. Auch diese Windenergieanlage verwirklicht die Merkmale, Vorteile und Eigenschaften des zuvor genannten erfindungsgemäßen Turms und des erfindungsgemäßen Verfahrens.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
Fig. 1 eine schematische Darstellung des Turmfußbereichs einer erfindungsgemäßen Windenergieanlage,
Fig. 2a), b) schematische Darstellungen erfindungsgemäß einsetzbarer Flanschverbindungen und
Fig. 3a)-d) schematische Darstellungen von Verankerungen eines erfindungsgemäßen Turmes.

In den Zeichnungen sind jeweils gleiche oder gleichartige Elemente und/oder Teile mit denselben Bezugsziffern versehen, so dass von einer erneuten Vorstellung jeweils abgesehen wird.

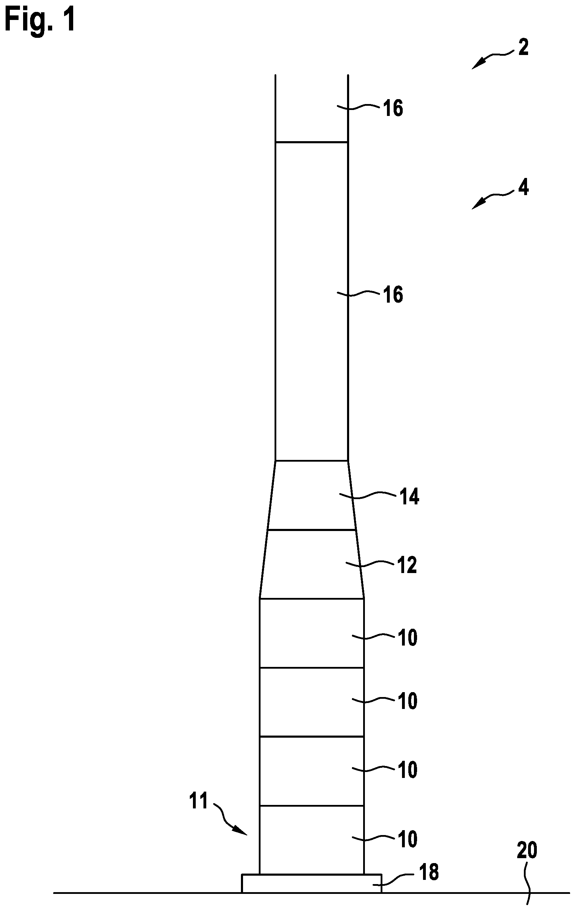

Figur 1 zeigt schematisch den Turmfußbereich eines erfindungsgemäßen Turmes 4 einer Windenergieanlage 2. In den Untergrund 20 ist ein Fundament 18 eingegossen, dessen Teil dargestellt ist, der über den Untergrund 20 hinausragt. Auf dem Fundament 18 sind sechs erfindungsgemäße Stahlrohrvollsegmente übereinander angeordnet, die den Turmfuß des Turms 4 bilden. Hierbei handelt es sich zunächst um vier zylindrische Stahlrohrvollsegmente 10 und zwei konische Stahlrohrvollsegmente 12, 14, von denen das obere Stahlrohrvollsegment 14 einen geringeren Durchmesser aufweist als das untere konische Stahlrohrvollsegment 12 und sich an dessen oberen Durchmesser anschließt.

Die sechs unteren Stahlrohrvollsegmente 10, 12, 14 weisen jeweils eine Segmenthöhe auf, die kleiner oder gleich ist als der Durchmesser des jeweiligen Stahlrohrvollsegments 10, 12, 14. Ihre Segmenthöhe ist jeweils kleiner als 4,50 m und somit auf Autobahnen und Schienen in Einbaulage mit vertikaler Längsachse transportabel. Der Durchmesser ist größer als 4,50 m und erlaubt somit große Nabenhöhen der Windenergieanlage 2. Es schließen sich herkömmliche schlanke Stahlrohrvollsegmente 16 an, die auf der Seite liegend transportiert werden, also mit horizontaler Längsachse.

Die Verbindungen zwischen den einzelnen Stahlrohrvollsegmenten 10, 12, 14, 16 sind jeweils als Flanschverbindungen ausgebildet. Aufgrund des erhöhten Durchmessers im Turmfußbereich weisen diese Flanschverbindungen eine ausreichende Fläche auf, um die notwendige Anzahl von Bolzen aufzunehmen. Die Ausbildung der Verbindungen als Flanschverbindungen stellt sicher, dass eine hohe Verbindungsqualität erreicht wird und vereinfacht die Wartung der Verbindungen.

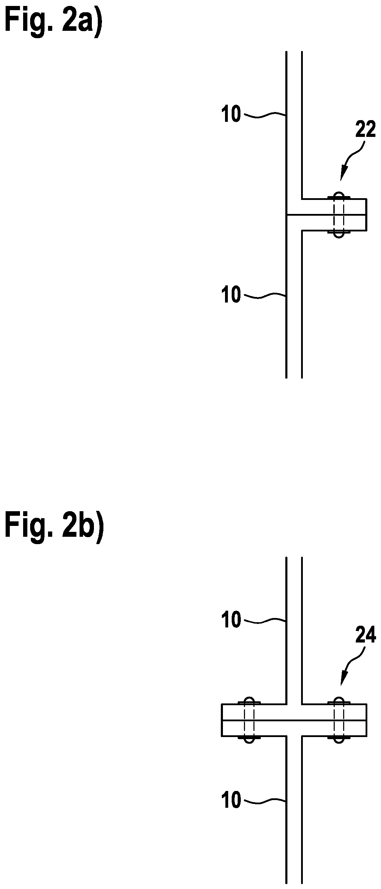

In Figur 2 a) ist schematisch eine erfindungsgemäße Flanschverbindung in Form einer L-Flanschverbindung 22 zwischen zwei zylindrischen Stahlrohrvollsegmenten 10 dargestellt. Der Flansch ragt dabei in das Turminnere und ist von außen nicht sichtbar. Alternativ ist in Figur 2 eine erfindungsgemäße Flanschverbindung in Form einer T-Flanschverbindung 24 gezeigt, bei der der Flanschring nach innen und nach außen verläuft und sowohl innen als auch außen entsprechende Bolzen angebracht werden.

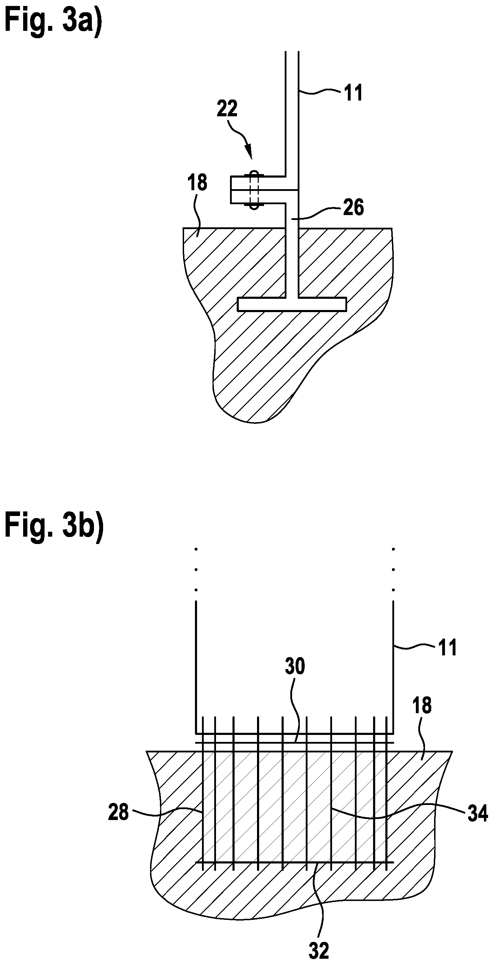

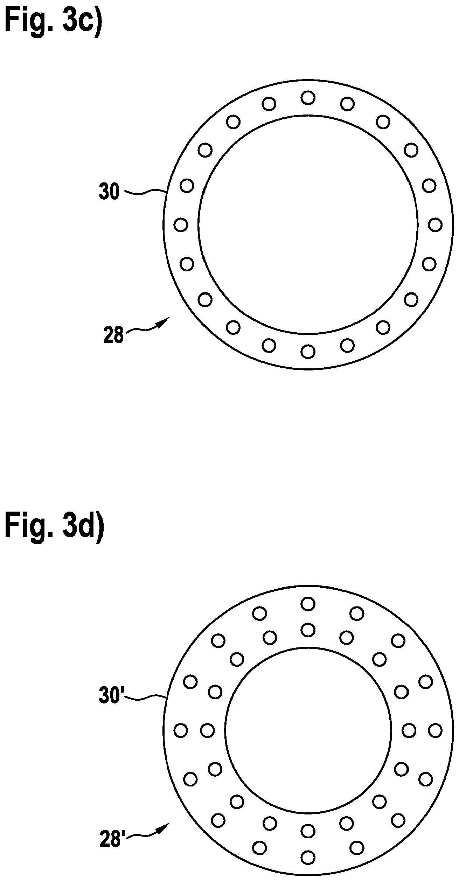

In Figur 3 sind verschiedene Alternativen für die Verankerung des erfindungsgemäßen Turms 4 im Fundament 18 dargestellt. So zeigt Figur 3 a) eine Alternative, in der in den Beton des Fundaments 18 der untere Teil eines Stahlsegments 26 einbetoniert ist, welche am unteren Ende einen T-Fuß aufweist, sodass es sicher im Beton aufgenommen ist. Am oberen Ende weist das Stahlsegment 26 einen L-Flansch 22 auf, auf welchem ein entsprechendes unterstes Stahlrohrvollsegment 11 oder alternativ ein Turmfußadapter aufgesetzt und mit Bolzen verschraubt worden ist.

In Figur 3 b) ist als Alternative gezeigt, dass ein einreihiger Ankerkorb 28 zum größten Teil in den Beton des Fundaments 18 einbetoniert worden ist. Der Ankerkorb 28 umfasst eine Vielzahl von langen Verankerungsbolzen 34, die zwischen einem oberen Schablonenring 30 und einer ringförmigen unteren Ankerplatte 32 geführt sind, von denen die untere Ankerplatte 32 mit einbetoniert ist. Es verbleibt ein Spalt zwischen dem oberen Schablonenring 30 und der Oberfläche des Fundaments 18. In einer Ausführungsform wird das unterste Segment auf das Fundament 18 aufgesetzt, ausgerichtet und der Spalt mit beispielsweise Pagelmörtel unterfüttert. Nach dem Aushärten des Mörtels werden die Fundamentbolzen angezogen und der Turm weiter errichtet. Alternativ kann ein Lastverteilblech auf das Fundament gelegt, ausgerichtet und unterfüttert werden. Nach dem Aushärten des Pagelmörtels wird dann mit der Turmerrichtung begonnen. Vorzugsweise wird ein zweilagiges Lastverteilblech verwendet. Auch in diesen Fällen kann noch ein Turmfußadapter zwischengeschaltet werden.

In den Figuren 3 c) und 3 d) sind beispielhaft die oberen Schablonenringe 30, 30' zweier verschiedener Ausführungsbeispiele von Ankerkörben 28, 28' gezeigt, wobei der obere Schablonenring 30 des Ankerkorbs 28 einreihig ausgeführt ist, während der obere Schablonenring 30' des Ankerkorbs 28' zweireihig ausgeführt ist. Die unteren Ankerplatten entsprechen insofern auch den oberen Schablonenringen dieser beiden Ausführungsbeispiele. Die oberen Schablonenringe werden nach dem Aushärten des Fundaments entfernt, beim Einsatz eines Ankerkorbs wird danach der Adapterflansch oder der Turmflansch untergossen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Windenergieanlage
- 4: Turm
- 10: zylindrisches Stahlrohrvollsegment
- 11: unterstes Stahlrohrvollsegment
- 12, 14: konisches Stahlrohrvollsegment
- 16: langes Stahlrohrvollsegment
- 18: Fundament
- 20: Untergrund
- 22: L-Flanschverbindung
- 24: T-Flanschverbindung
- 26: einbetoniertes Stahlsegment
- 28: Ankerkorb (einreihig)
- 28': Ankerkorb (zweireihig)
- 30: oberer Schablonenring (einreihig)
- 30': oberer Schablonenring (zweireihig)
- 32: Ankerplatte
- 34: Verankerungsbolzen

## Patentansprüche

1. Turm (4) einer Windenergieanlage (2), umfassend eine Mehrzahl von zylindrischen und/oder konischen Stahlrohrvollsegmenten (10, 12, 14, 16), die auf einem Fundament (18) vertikal übereinander angeordnet und miteinander mittels Flanschverbindungen (22, 24) verbunden sind, wobei wenigstens zwei der zuunterst im Turm (4) angeordneten Stahlrohrvollsegmente (10, 12, 14) jeweils ein Verhältnis von Segmenthöhe zu maximalem Durchmesser von 1 oder weniger aufweisen, wobei die oberen Stahlrohrvollsegmente (16) jeweils eine Segmenthöhe aufweisen, die größer als ihr jeweiliger maximaler Durchmesser ist, und wobei ein unterstes Stahlrohrvollsegment (11) aus der Mehrzahl von zylindrischen und/oder konischen Stahlrohrvollsegmenten über eine Flanschverbindung (22, 24) an ein im Fundament (18) einbetoniertes Stahlsegment (26) oder mit einer unteren L-Flanschverbindung (22) mit einem im Fundament (18) eingegossenen einreihigen Ankerkorb (28) oder mit einer unteren T-Flanschverbindung (24) mit einem im Fundament (18) eingegossenen zweireihigen Ankerkorb (28') angeschlossen ist.

2. Turm (4) nach Anspruch 1, **dadurch gekennzeichnet, dass** zwischen zwei und acht der zuunterst im Turm (4) angeordneten Stahlrohrvollsegmente (10, 12, 14) jeweils ein Verhältnis von Segmenthöhe zu maximalem Durchmesser von 1 oder weniger aufweisen.

3. Turm (4) nach Anspruch 1 oder 2, **dadurch gekennzeichnet, dass** die wenigstens zwei zuunterst im Turm (4) angeordneten Stahlrohrvollsegmente (10, 12, 14) jeweils eine Segmenthöhe von maximal 4,5 m und einen maximalen Durchmesser von minimal 4,5 m aufweisen.

4. Turm (4) nach Anspruch 3, **dadurch gekennzeichnet, dass** die Segmenthöhen der wenigstens zwei zuunterst im Turm (4) angeordneten Stahlrohrvollsegmente (10, 12, 14) zwischen 3,8 m und 4,5 m betragen und die maximalen Durchmesser der wenigstens zwei zuunterst im Turm (4) angeordneten Stahlrohrvollsegmente (10, 12, 14) zwischen 4,5 m und 6,5 m, insbesondere zwischen 5,5 m und 6 m, betragen.

5. Turm (4) nach einem der Ansprüche 1 bis 4, **dadurch gekennzeichnet, dass** wenigstens ein Teil der Flanschverbindungen zwischen den Stahlrohrvollsegmenten (10, 12, 14, 16) als L-Flanschverbindungen (22) ausgestaltet ist, wobei insbesondere ein anderer Teil der Flanschverbindungen als T-Flanschverbindungen (24) ausgestaltet ist.

6. Turm (4) nach einem der Ansprüche 1 bis 5, **dadurch gekennzeichnet, dass** das unterste Stahlrohrvollsegment (11) mittels eines Turmfußadapters mit dem Fundament (18) verbunden ist.

7. Verfahren zum Errichten eines Turms (4) einer Windenergieanlage (2) aus einer Mehrzahl von zylindrischen und/oder konischen Stahlrohrvollsegmenten (10, 12, 14, 16), wobei die Stahlrohrvollsegmente (10, 12, 14, 16) aufeinander aufgesetzt und mittels Flanschverbindungen (22, 24) miteinander verbunden werden, wobei wenigstens zwei der zuunterst im Turm (4) angeordneten Stahlrohrvollsegmente (10, 12, 14) jeweils ein Verhältnis von Segmenthöhe zu maximalem Durchmesser von 1 oder weniger aufweisen, wobei die oberen Stahlrohrvollsegmente (16) jeweils eine Segmenthöhe aufweisen, die größer als ihr jeweiliger maximaler Durchmesser ist, und wobei ein unterstes Stahlrohrvollsegment (11) aus der Mehrzahl von zylindrischen und/oder konischen Stahlrohrvollsegmenten über eine Flanschverbindung (22, 24) an ein in einem Fundament (18) einbetoniertes Stahlsegment (26) oder mit einer unteren L-Flanschverbindung (22) mit einem im Fundament (18) eingegossenen einreihigen Ankerkorb (28) oder mit einer unteren T-Flanschverbindung (24) mit einem im Fundament (18) eingegossenen zweireihigen Ankerkorb (28') angeschlossen wird.

8. Verfahren nach Anspruch 7, **dadurch gekennzeichnet, dass** zuunterst im Turm (4) zwischen zwei und acht Stahlrohrvollsegmente (10, 12, 14) eingebaut werden, deren Verhältnis von Segmenthöhe zu maximalem Durchmesser 1 oder weniger beträgt.

9. Verfahren nach Anspruch 7 oder 8, **dadurch gekennzeichnet, dass** zuunterst im Turm (4) wenigstens zwei Stahlrohrvollsegmente (10, 12, 14) eingebaut werden, die jeweils eine Segmenthöhe von maximal 4,5 m und einen maximalen Durchmesser von minimal 4,5 m aufweisen.

10. Verfahren nach Anspruch 9, **dadurch gekennzeichnet, dass** zuunterst im Turm (4) wenigstens zwei Stahlrohrvollsegmente (10, 12, 14) eingebaut werden, die Segmenthöhen der wenigstens zwei zuunterst im Turm (4) angeordneten Stahlrohrvollsegmente (10, 12, 14) zwischen 3,8 m und 4,5 m betragen und die maximalen Durchmesser der wenigstens zwei zuunterst im Turm (4) angeordneten Stahlrohrvollsegmente (10, 12, 14) zwischen 4,5 m und 6,5 m, insbesondere zwischen 5,5 m und 6 m, betragen.

11. Verfahren nach einem der Ansprüche 7 bis 10, **dadurch gekennzeichnet, dass** die Stahlrohrvollsegmente (10, 12, 14, 16) wenigstens zum Teil mittels L-Flanschverbindungen (22) miteinander verbunden werden, wobei insbesondere ein anderer Teil der Stahlrohrvollsegmente (10, 12, 14, 16) mittels T-Flanschverbindungen (24) miteinander verbunden wird.

12. Verfahren nach einem der Ansprüche 7 bis 11, **dadurch gekennzeichnet, dass** das unterste Stahlrohrvollsegment (11) mittels eines Turmfußadapters mit dem Fundament (18) verbunden wird.

13. Windenergieanlage (2) mit einem Turm (4) nach einem der Ansprüche 1 bis 6.

## Claims

1. A tower (4) of a wind energy installation (2), wherein the tower comprises a plurality of cylindrical and / or conical 360 degree steel pipe segments (10, 12, 14, 16) which are arranged vertically one on top of the other on a foundation (18) and which are connected to one another by means of flange connections (22, 24), wherein at least two of the 360 degree steel pipe segments (10, 12, 14) which are arranged at the bottom of the tower (4) each have a ratio of segment height to maximum diameter of 1 or less, wherein the upper 360 degree steel pipe segments (16) each have a segment height which is greater than their respective maximum diameter, and wherein a lowermost 360 degree steel pipe segment (11) of the plurality of cylindrical and / or conical 360 degree steel pipe segments is connected, via a flange connection (22, 24), to a steel segment (26) which is set in concrete in the foundation (18), or, by means of a lower L-flange connection (22), to a single-row anchor cage (28) which is cast in the foundation (18), or, by means of a lower T-flange connection (24) to a double-row anchor cage (28') cast in the foundation (18).

2. The tower (4) according to claim 1, **characterised in that** between two and eight of the 360 degree steel pipe segments (10, 12, 14) which are arranged at the bottom of the tower (4) each have a ratio of segment height to maximum diameter of 1 or less.

3. The tower (4) according to claim 1 or 2, **characterised in that** the at least two 360 degree steel pipe segments (10, 12, 14) which are arranged at the bottom of the tower (4) each have a segment height of at most 4.5 m and a maximum diameter of at least 4.5 m.

4. The tower (4) according to claim 3, **characterised in that** the segment heights of the at least two 360 degree steel pipe segments (10, 12, 14) which are arranged at the bottom of the tower (4) are between 3.8 m and 4.5 m and the maximum diameters of the at least two 360 degree steel pipe segments (10, 12, 14) which are arranged at the bottom of the tower (4) are between 4.5 m and 6.5 m, in particular between 5.5 m and 6 m.

5. The tower (4) according to any one of the claims 1 to 4, **characterised in that** at least a portion of the flange connections between the 360 degree steel pipe segments (10, 12, 14, 16) is constructed in the form of an L-flange connection (22), wherein in particular another portion of the flange connections is constructed in the form of a T-flange connection (24).

6. The tower (4) according to any one of the claims 1 to 5, **characterised in that** the lowermost 360 degree steel pipe segment (11) is connected to the foundation (18) by means of a tower base adapter.

7. A method of erecting a tower (4) of a wind energy installation (2) from a plurality of cylindrical and / or conical 360 degree steel pipe segments (10, 12, 14, 16), wherein the 360 degree steel pipe segments (10, 12, 14, 16) are placed one on top of the other and are connected to one another by means of flange connections (22, 24), wherein at least two of the 360 degree steel pipe segments (10, 12, 14) which are arranged at the bottom of the tower (4) each have a ratio of segment height to maximum diameter of 1 or less, wherein the upper 360 degree steel pipe segments (16) each have a segment height which is greater than their respective maximum diameter, and wherein a lowermost 360 degree steel pipe segment (11) of the plurality of cylindrical and / or conical 360 degree steel pipe segments is connected, via a flange connection (22, 24), to a steel segment (26) which is set in concrete in a foundation (18), or, by means of a lower L-flange connection (22), to a single-row anchor cage (28) which is cast in the foundation (18), or, by means of a lower T-flange connection (24) to a double-row anchor cage (28') cast in the foundation (18).

8. The method according to claim 7, **characterised in that** between two and eight 360 degree steel pipe segments (10, 12, 14) are installed at the bottom of the tower (4), the ratio of segment height to maximum diameter of which is 1 or less.

9. The method according to claim 7 or 8, **characterised in that** at least two 360 degree steel pipe segments (10, 12, 14) are installed at the bottom of the tower (4), each of which has a segment height of at most 4.5 m and a maximum diameter of at least 4.5 m.

10. The method according to claim 9, **characterised in that** at least two 360 degree steel pipe segments (10, 12, 14) are installed at the bottom of the tower (4), wherein the segment heights of the at least two 360 degree steel pipe segments (10, 12, 14) which are arranged at the bottom of the tower (4) are between 3.8 m and 4.5 m and the maximum diameters of the at least two 360 degree steel pipe segments (10, 12, 14) which are arranged at the bottom of the tower (4) are between 4.5 m and 6.5 m, in particular between 5.5 m and 6 m.

11. The method according to any one of the claims 7 to 10, **characterised in that** the 360 degree steel pipe segments (10, 12, 14, 16) are connected to one another at least partly by means of L-flange connections (22), in particular wherein another portion of the 360 degree steel pipe segments (10, 12, 14, 16) is connected to one another by means of T-flange connections (24).

12. The method according to any one of the claims 7 to 11, **characterised in that** the lowermost 360 degree steel pipe segment (11) is connected to the foundation (18) by means of a tower base adapter.

13. A wind energy installation (2) comprising a tower (4) according to any one of the claims 1 to 6.

## Revendications

1. Tour (4) d'une éolienne (2), comprenant une pluralité de segments pleins de tube d'acier (10, 12, 14, 16) cylindriques et/ou coniques qui sont agencés sur une fondation (18) verticalement les uns aux dessus des autres et sont reliés entre eux au moyen de liaisons bridées (22, 24), dans laquelle au moins deux des segments pleins de tube d'acier (10, 12, 14) agencés tout en bas dans la tour (4) présentent respectivement un rapport de hauteur de segment au diamètre maximum de 1 ou moins, dans laquelle les segments pleins de tube d'acier (16) supérieurs présentent respectivement une hauteur de segment qui est supérieure à son diamètre maximum respectif, et dans laquelle un segment plein de tube d'acier (11) le plus bas de la pluralité de segments pleins de tube d'acier cylindriques et/ou coniques est raccordé par le biais d'une liaison bridée (22, 24) à un segment d'acier (26) bétonné dans la fondation (18) ou avec une liaison bridée en L (22) inférieure à un panier d'ancrage (28) à une rangée moulé dans la fondation (18) ou avec une liaison bridée en T (24) inférieure à un panier d'ancrage (28') à deux rangées moulé dans la fondation (18).

2. Tour (4) selon la revendication 1, **caractérisée en ce qu'**entre deux et huit des segments pleins de tube d'acier (10, 12, 14) agencés tout en bas dans la tour (4) présentent respectivement un rapport de hauteur de segment à diamètre maximum de 1 ou moins.

3. Tour (4) selon la revendication 1 ou 2, **caractérisée en ce que** les au moins deux segments pleins de tube d'acier (10, 12, 14) agencés tout en bas dans la tour (4) présentent respectivement une hauteur de segment de 4,5 m maximum et un diamètre maximum de 4,5 m minimum.

4. Tour (4) selon la revendication 3, **caractérisée en ce que** les hauteurs de segment des au moins deux segments pleins de tube d'acier (10, 12, 14) agencés tout en bas dans la tour (4) s'élèvent entre 3,8 m et 4,5 m et les diamètres maximum des au moins deux segments pleins de tube d'acier (10, 12, 14) agencés tout en bas dans la tour (4) s'élèvent entre 4,5 m et 6,5 m, en particulier entre 5,5 m et 6 m.

5. Tour (4) selon l'une quelconque des revendications 1 à 4, **caractérisée en ce qu'**au moins une partie des liaisons bridées est configurée entre les segments pleins de tube d'acier (10, 12, 14, 16) comme liaisons bridées en L (2), dans laquelle en particulier une autre partie des liaisons bridées est configurée comme liaisons bridées en T (24).

6. Tour (4) selon l'une quelconque des revendications 1 à 5, **caractérisée en ce que** le segment plein de tube d'acier (11) le plus bas est relié au moyen d'un adaptateur de pied de tour à la fondation (18).

7. Procédé de construction d'une tour (4) d'une éolienne (2) à partir d'une pluralité de segments pleins de tube d'acier (10, 12, 14, 16) cylindriques et/ou coniques, dans lequel les segments pleins de tube d'acier (10, 12, 14, 16) sont placés les uns sur les autres et sont reliés entre eux au moyen de liaison bridées (22, 24), dans lequel au moins deux des segments pleins de tube d'acier (10, 12, 14) agencés tout en bas dans la tour (4) présentent respectivement un rapport de hauteur de segment au diamètre maximum de 1 ou moins, dans lequel les segments pleins de tube d'acier (16) supérieurs présentent respectivement une hauteur de segment qui est supérieure à son diamètre maximum respectif, et dans lequel un segment plein de tube d'acier (11) le plus bas de la pluralité de segments pleins de tube d'acier cylindriques et/ou coniques est raccordé par le biais d'une liaison bridée (22, 24) à un segment d'acier (26) bétonné dans une fondation (18) ou avec une liaison bridée en L (22) inférieure à un panier d'ancrage (28) à une rangée moulé dans la fondation (18) ou avec une liaison bridée en T (24) inférieure à un panier d'ancre (28') à deux rangées moulé dans la fondation (18).

8. Procédé selon la revendication 7, **caractérisé en ce qu'**entre deux et huit segments pleins de tube d'acier (10, 12, 14) sont installés tout en bas dans la tour (4), dont le rapport de hauteur de segment au diamètre maximum s'élève à 1 ou moins.

9. Procédé selon la revendication 7 ou 8, **caractérisé en ce qu'**au moins deux segments pleins de tube d'acier (10, 12, 14) sont installés tout en bas dans la tour (4), lesquels présentent respectivement une hauteur de segment de 4,5 m maximum et un diamètre maximum de 4,5 m minimum.

10. Procédé selon la revendication 9, **caractérisé en ce qu'**au moins deux segments pleins de tube d'acier (10, 12, 14) sont installés tout en bas dans la tour (4), les hauteurs de segment des au moins deux segments pleins de tube d'acier (10, 12, 14) agencés tout en bas dans la tour (4) s'élèvent entre 3,8 m et 4,5 m et les diamètres maximum des au moins deux segments pleins de tube d'acier (10, 12, 14) agencés tout en bas dans la tour (4) s'élèvent entre 4,5 m et 6,5 m, en particulier entre 5,5 m et 6 m.

11. Procédé selon l'une quelconque des revendications 7 à 10, **caractérisé en ce que** les segments pleins de tube d'acier (10, 12, 14, 16) sont reliés entre eux au moins partiellement au moyen de liaisons bridées en L (22), dans lequel en particulier une autre partie des segments pleins de tube d'acier (10, 12, 14, 16) est reliée entre eux au moyen de liaisons bridées en T (24).

12. Procédé selon l'une quelconque des revendications 7 à 11, **caractérisé en ce que** le segment plein de tube d'acier (11) le plus bas est relié au moyen d'un adaptateur de pied de tour à la fondation (18).

13. Eolienne (2) avec une tour (4) selon l'une quelconque des revendications 1 à 6.
